# EUROPÄISCHE PATENTSCHRIFT

(11) **EP 2 788 245 B1**
(45) Veröffentlichungstag und Bekanntmachung des Hinweises auf die Patenterteilung: **19.10.2016**
(21) Anmeldenummer: 12798194.2
(22) Anmeldetag: 15.11.2012
(51) Int. Cl.: B62D 15/02, B60Q 1/50, G06T 1/00, G06K 9/00, G06T 7/00, H01B 12/06

(54) **VERFAHREN UND VORRICHTUNG ZUR LOKALISATION EINER VORDEFINIERTEN PARKPOSITION**
METHOD AND DEVICE FOR LOCATING A PREDEFINED PARKING POSITION
PROCÉDÉ ET DISPOSITIF POUR LOCALISER UN EMPLACEMENT DE STATIONNEMENT PRÉDÉFINI

(30) Priorität: 06.12.2011 DE 102011087797
(43) Veröffentlichungstag der Anmeldung: 15.10.2014
(73) Patentinhaber: Robert Bosch GmbH, 70442 Stuttgart (DE)
(72) Erfinder: RAISCH, Florian, 71116 Gaertringen (DE); NIEHSEN, Wolfgang, 31162 Bad Salzdetfurth (DE); WINGBERMUEHLE, Jochen, 30966 Hemmingen (DE); NIEMZ, Volker, 71277 Rutesheim (DE); ENGELBERG, Thomas, 85247 Schwabhausen (DE); SIMON, Stephan, 31079 Sibbesse (DE); HELMLE, Michael, 73732 Esslingen (DE)
(86) Internationale Anmeldenummer: PCT/EP2012/072689
(87) Internationale Veröffentlichungsnummer: WO 2013/083379

(56) Entgegenhaltungen:
- EP-A1- 1 642 808
- DE-A1- 19 505 244
- DE-A1-102006 040 347
- JP-A- 2002 170 103
- JP-A- 2010 015 331
- JP-A- 2010 123 012
- US-A1- 2010 245 574
- US-A1- 2011 200 258

## Beschreibung

### Stand der Technik

Die vorliegende Erfindung betrifft ein Verfahren sowie eine entsprechende Vorrichtung, mit welchem bzw. welcher ein Fahrzeug eine vordefinierte Parkposition erkennen bzw. die eigene relative Position und Ausrichtung zu einem vordefinierten Parkposition feststellen kann. Damit ist der Erfindungsgegenstand dazu geeignet, in einem Fahrerassistenzsystem zur Unterstützung eines Fahrers beim Einparken sowie in einem System zum automatischen Einparken eines Fahrzeugs Verwendung zu finden.

EP 2 093 129 A2 zeigt ein Parkassistenzsystem sowie ein entsprechendes Verfahren, in welchem Mittel zum Erkennen von Parklückenmarkierungen vorgesehen sind, mit welchen die Richtung einer Parklückenmarkierung erkannt werden kann.

US 2008/0140286 A1 zeigt eine Vorrichtung zum Erkennen einer Parklückenmarkierung mit einem Mittel zum Extrahieren einer Parklückenbegrenzungslinie, welche ein Kamerabild aus einem Fahrzeugheck erhält. Eine Abgleicheinheit ermittelt eine Gleichung der Parklückenbegrenzungslinie durch dreidimensionales Abgleichen.

EP 1 642 808 A1 beschreibt eine Vorrichtung, bei welcher Fahrbahnmarkierungen (z.B. Parklückenmarkierungen) unter Verwendung einer 2-D-Kamera sowie eines Bildverarbeitungs-ASIC ermittelt werden. Hierzu werden aus mittels der Kamera aufgenommenen Daten sogenannte "Top-view-Bilder" ("Vogelperspektive") generiert und sämtliche zur Bilddarstellung dienenden Linien ("Scanning lines 16C") verwendet, indem ein Helligkeitsintegral in senkrechter Richtung der horizontalen Bildlinien gebildet wird. Auf Basis dieses Helligkeitsintegrals werden anschließend Bereiche mit hohem Helligkeitsgrad erhalten.

US 2010/0245574 A1 ist als nächstliegender Stand der Technik nach dem Oberbegriff des Anspruchs 1 zu sehen und offenbart ein Verfahren für ein Fortbewegungsmittel, mittels dessen Umgebungsobjekte und fahrbahnnahe Markierungen erkannt und lokalisiert werden können. Gemäß Abs. [0025] wird hierbei eine Kante, also eine zweidimensionale Struktur, einer Fahrbahnmarkierung in dem Kamerabild erkannt. Dies geschieht gemäß Abs. [0026] unter Verwendung von Helligkeits-oder Farbangaben des (gesamten) Kamerabildes und Positionsinformationen bezüglich des Kamerabildes, welche aus dem Kamerabild unter Verwendung der Kamera 7 erhalten werden. Weiter heißt es, dass der Mikrocomputer ein Objekt, basierend auf den erhaltenen Bildinformationen detektiert. Gemäß Abs. [0033] erkennt der Mikrocomputer eine Veränderung bezüglich Helligkeit eines Bildes gegenüber einem zuvor aufgenommenen Bild, welches im Speicher abgespeichert ist. Hierzu wird auch die Bewegung des Fahrzeugs berücksichtigt und die Änderung in einem imaginären zweidimensionalen Koordinatensystem auf einem Bildschirm dargestellt.

Ausgehend vom bekannten Stand der Technik ist es eine Aufgabe, ein Verfahren sowie eine Vorrichtung zur Verfügung zu stellen, mit welcher die Lage von Parklückenbegrenzungen mit möglichst geringem Speicher- und Rechenaufwand sowie kostengünstiger Hardware bewerkstelligt werden kann.

Offenbarung der Erfindung Die erfindungsgemäße Aufgabe wird gelöst durch ein Verfahren zur Lokalisation einer vordefinierten Parkposition mit den Merkmalen gemäß Anspruch 1 sowie eine entsprechende Vorrichtung gemäß Anspruch 4. Unter einer Parkposition sei im Rahmen der vorliegenden Erfindung eine als Parkplatz kenntlich gemachte vordefinierte Parkposition verstanden. Dies wird im Allgemeinen durch gerade Begrenzungslinien bewerkstelligt, welche in Abhängigkeit des Fahrbahnbelages durch farbliche Markierung, andersfarbige Steine (im Falle von Kopfsteinpflaster bzw. anderen Fahrbahnbelägen aus Einzelelementen) sowie zusätzlich auf die Fahrbahnoberfläche aufgebrachte Elemente, wie beispielsweise Markierungsnägel aus Aluminium, verwirklicht werden. Häufig bildet auch eine Bordsteinkante eine seitliche oder frontale Begrenzung einer vordefinierten Parklücke. Im Zuge der vorliegenden Erfindung sei unter einer Lokalisation einer vordefinierten Parkposition ein Vorgang verstanden, bei welchem eine Orts- und Lagebestimmung einer solchen vordefinierten Parkposition relativ zu einem Fahrzeug vorgenommen wird. Erfindungsgemäß wird hierbei ein Bodenbereich der Fahrzeugumgebung mit einem optischen 2D-Kamerasystem aufgenommen (also "abgelichtet"). Hierzu kann beispielsweise eine ohnehin zum Zwecke der Einparkassistenz vorgesehene Rückfahrkamera bzw. eine im Bereich der Fahrzeugfront angeordnete Kamera für eine Verkehrszeichenerkennung oder andere Fahrerassistenzsysteme Verwendung finden. Erfindungsgemäß ist weiter vorgesehen, dass auf vordefinierten Auswertelinien innerhalb des Kamerabildes eine Ermittlung von Helligkeitsverläufen in einzelnen "frames", also Bildern, vorgenommen wird. Vorzugsweise decken die Auswertelinien einen wesentlichen Bereich des Kamerabildes derart ab, dass auch bei unterbrochenen Parkpositionsbegrenzungen beispielsweise durch Markierungsnägel eine hinreichende Anzahl von Auswertelinien einen Bereich der Parklückenbegrenzung erfasst. In der Praxis haben sich Abstände zwischen den Linien derart bewährt, dass pro Meter erfasster Fahrbahnoberfläche ca. 6 bis 20, vorzugsweise 8 bis 14 Auswertelinien vorgesehen sind. Anschließend werden die Helligkeitsverläufe der Bildelemente, welche auf den vordefinierten Auswertelinien liegen, ermittelt. Hierbei macht sich die vorliegende Erfindung zu Nutze, dass Parkpositionsbegrenzungslinien auch für den Fahrer für gewöhnlich durch ein Mindestmaß an optischem Kontrast gegenüber dem übrigen Fahrbahnbelag kenntlich gemacht werden. Unwesentlich ist es dabei, ob die Markierungen heller oder dunkler als der umgebende Fahrbahnbelag sind. Bei der Ermittlung von Helligkeitssprüngen auf den vordefinierten Auswertelinien wird im Falle einer herkömmlichen Begrenzungslinie ein erster Helligkeitssprung von einem ersten Helligkeitswert auf einen zweiten Helligkeitswert, dicht gefolgt von einem Sprung von dem zweiten Helligkeitswert zurück auf den ersten Helligkeitswert zu erwarten sein. Ist nun eine hinreichende Anzahl von Helligkeitssprüngen in der einen Richtung festgestellt worden, so kann davon ausgegangen werden, dass diese Helligkeitssprünge mit einer Längsseite einer Parklückenbegrenzungslinie korrespondieren. Befinden sich Helligkeitssprünge in umgekehrter Richtung parallel hierzu, so kann davon ausgegangen werden, dass diese mit einer entgegen gelegenen Seite der Parklückenbegrenzungslinie korrespondieren. Somit kann aus den Helligkeitsverläufen auf den Auswertelinien eine Grenze zwischen Fahrbahn bzw. Pflasteroberfläche und einer Parklückenbegrenzungslinie ermittelt werden, ohne komplizierte Algorithmen zur Extraktion von Liniengeometrien aus 2D-Kamerabildern durchführen zu müssen.

Die Unteransprüche zeigen bevorzugte Weiterbildungen der Erfindung.

Weiter kann das erfindungsgemäße Verfahren einen Schritt der Ermittlung der Lage der auf den Auswertelinien abgebildeten Bodenbereiche relativ zum Fahrzeug umfassen. Sofern die Auswertelinien innerhalb des Kamerabildes fixiert sind und die Kamera relativ zum Fahrzeug fixiert ist, kann unter der Annahme, dass sich das Fahrzeug mit allen vier Rädern auf einem ebenen Grund befindet, eine Zuordnung zwischen den Auswertelinien und dem abgebildeten Bodenbereich besonders einfach erfolgen. In dieser Konstellation befinden sich die Auswertelinien innerhalb des Kamerabildes stets auf abgebildeten Bodenbereichen, welche gegenüber dem Fahrzeug eine identische Lage haben. Somit kann die Schar von Auswertelinien innerhalb des Kamerabildes durch lineare Gleichungen abgebildet werden, mittels welcher eine eindeutige Zuordnung eines Helligkeitssprungs zu einem vom 2D-Kamerasystem erfassten Bodenbereich erfolgen kann.

Wird für eine hinreichende Zahl von Auswertelinien ein Helligkeitssprung ermittelt und liegen die ermittelten Helligkeitssprünge derart zueinander, dass sie einer Linie auf dem Bodenbereich zuordenbar sind, wird erfindungsgemäß entschieden, dass eine Parklückenbegrenzung (Parklückenmarkierung und/oder Bordsteinkante) vorliegt. Eine auf diese Weise erkannte Parklückenbegrenzung kann zur Lokalisation einer vordefinierten Parkposition in Park- und Fahrerassistenzsystemen eines Fahrzeugs Verwendung finden.

Weiter vorteilhaft kann vorgesehen werden, dass Helligkeitssprünge auf einer Auswertelinie daraufhin untersucht werden, ob in einem vordefinierten Abstandsbereich auf der Auswertelinie ein weiterer Helligkeitssprung in umgekehrter Richtung (von hell nach dunkel bzw. von dunkel nach hell) vorhanden ist. Der vordefinierte Abstandsbereich kann beispielsweise als Gleichung festgelegt sein (z.B. 2m < x < 4 m). Somit kann eine Plausibilisierung einer aufgrund von Helligkeitssprüngen im Bodenbereich identifizierten Linie dahingehend durchgeführt werden, ob diese tatsächlich einer Parklückenbegrenzung bzw. einem Bordstein zuzuordnen ist oder ob die zugehörige Form für eine zweite Parklückenmarkierung nicht in Frage kommt (beispielsweise Zebrastreifen oder Sperfflächenschraffur). Somit wird lediglich auf eine zugehörige zweite Parklückenbegrenzung geschlossen, wenn die Helligkeitsbereiche oberhalb des vordefinierten Schwellwertes innerhalb eines vordefinierten Abstandsbereiches zueinander liegen.

Weiter vorteilhaft kann die Ermittlung von Helligkeitssprüngen über mehr als ein Bild des Kamerasystems erfolgt. Wenn sich das Fahrzeug bewegt, können manche Fehler (z.B. Verschmutzung der Kameralinse, Pixelfehler) korrigiert werden, indem korrespondierende Punkte des Bodenbereiches an unterschiedlichen Punkten des Kamerabildes abgebildet werden. Hierbei können Odometriedaten des Fahrzeugs verwendet werden, um eine Korrelation der Bilder zu unterstützen.

Gemäß einem weiteren Aspekt der vorliegenden Erfindung wird eine Vorrichtung zur Lokalisation von vordefinierten Parkpositionen vorgeschlagen. Die Vorrichtung umfasst dabei ein fahrzeugbasiertes 2D-Kamerasystem und eine Auswerteeinheit. Dabei kann das fahrzeugbasierte 2D-Kamerasystem eine Rückfahrkamera und/oder eine Kamera zur Verkehrszeichenerfassung umfassen und die Auswerteeinheit durch ein im Fahrzeug vorhandenes Steuergerät, beispielsweise eine Head unit, gebildet werden. Die gegenständlichen Merkmale gemäß der vorliegenden Erfindung können somit ebenfalls anderen Zwecken zukommen und für andere Zwecke im Fahrzeug vorgesehen sein, so dass sich eine erfindungsgemäße Ausgestaltung dieser Komponenten durch die Implementation von Logik, beispielsweise in Form eines Programmcodes, welcher innerhalb der Head unit ausgeführt wird, beschränken kann. Die erfindungsgemäßen Schritte entsprechen dabei den oben beschriebenen Verfahrensschritten gemäß dem erfindungsgemäßen Verfahren.

Gemäß einem weiteren Aspekt der vorliegenden Erfindung wird ein Fahrerassistenzsystem zur Unterstützung eines Fahrers beim Einparken oder ein System zum automatischen Einparken zur Verfügung gestellt, welches eine Lokalisation einer vordefinierten Parkposition durch ein erfindungsgemäßes Verfahren durchführt. Hierzu kann das Fahrerassistenzsystem eine erfindungsgemäße Vorrichtung zur Lokalisation von vordefinierten Parkpositionen umfassen oder sich einer solchen bedienen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine perspektivische Ansicht eines mit einer erfindungsgemäßen Vorrichtung ausgestatteten Fahrzeugs vor einer Parklücke;
- Figur 2: eine Prinzipskizze einer Abbildung der Parklücke aus Figur 1;
- Figur 3a: die Helligkeitssignatur entlang einer Auswertelinie 5a aus Figur 2;
- Figur 3b: eine Helligkeitssignatur entlang einer Auswertelinie 5b aus Figur 2;
- Figur 4: ein Ablaufdiagramm visualisierend die Schritte gemäß einem Ausführungsbeispiel eines erfindungsgemäßen Verfahrens.

### Ausführungsformen der Erfindung

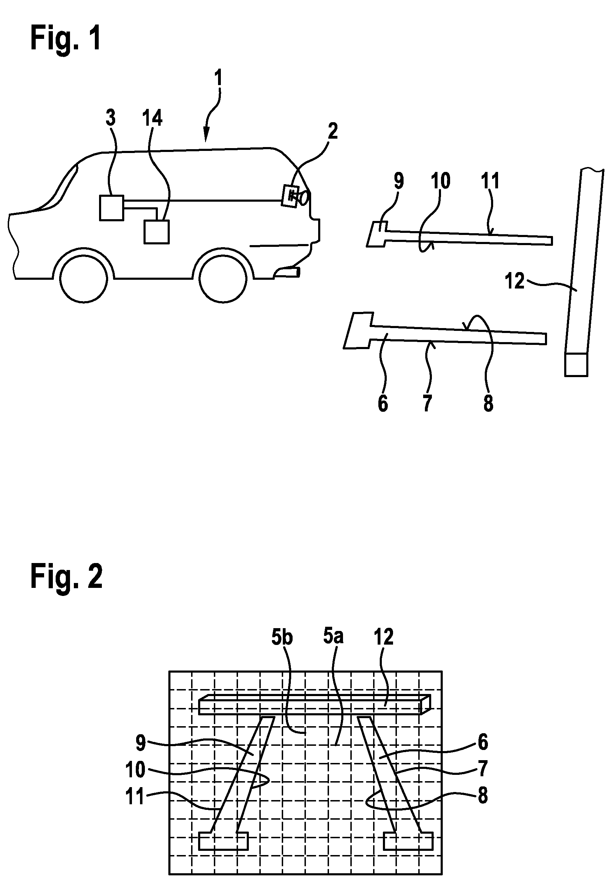

Figur 1 zeigt ein Fahrzeug 1, welches mit einem 2D-Kamerasystem 2 ausgestattet ist. Das 2D-Kamerasystem 2 ist in einem Heckbereich des Fahrzeugs 1 angeordnet und auf einen hinter dem Fahrzeug liegenden (Boden-) bereich gerichtet. Weiter ist im Fahrzeug 1 eine Auswerteeinheit 3 vorgesehen, welche die Bildsignale des Kamerasystems 2 empfängt. Auswerteeinheit 3 ist mit einem Speichermittel 14 verbunden, in welchem sie Kamerabilder zur Analyse, insbesondere zur frameübergreifenden Korrelation, abspeichern und wieder aus ihnen abrufen kann. Hinter dem Fahrzeug befinden sich zwei parallele Parklückenmarkierungen 6, 9 sowie ein im Wesentlichen senkrecht zu den Parklückenmarkierungen 6, 9 angeordneter Bordstein 12. Die erste Parklückenmarkierung 6 weist eine erste Seite 7 sowie eine zweite Seite 8 auf, an welchen sie an die Oberfläche des Asphalts angrenzt. Desgleichen weist die zweite Parklückenmarkierung 9 eine erste Seite 10 und eine zweite Seite 11 auf, an welchen sie an den unter ihr liegenden Asphalt angrenzt.

Figur 2 zeigt eine mögliche Ansicht des Kamerasystems 2 aus Figur 1. Zusätzlich zu den in Verbindung mit Figur 1 beschriebenen Komponenten der vordefinierten Parkposition sind dem Bild Auswertelinien 5 überlagert. Im dargestellten Ausführungsbeispiel sind horizontale Auswertelinien 5a und vertikale Auswertelinien 5b jeweils parallel zu einander ausgerichtet und durchsetzen das gesamte Kamerabild.

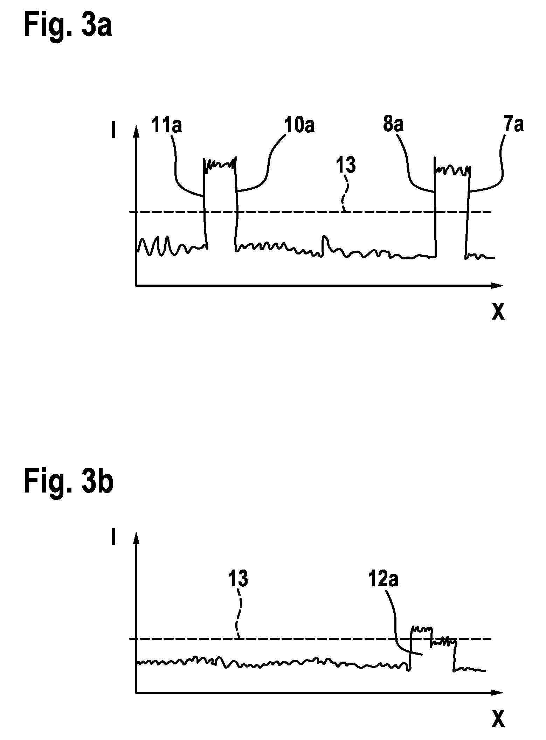

In Figur 3a ist ein möglicher Helligkeitsverlauf entlang einer Auswertelinie 5a dargestellt. Während auf der Abszisse die Position in negativer Fahrzeugquerrichtung aufgetragen ist, ist auf der Ordinate die Lichtintensität aufgetragen. Zudem ist ein Beispiel für einen Helligkeitsschwellwert 13 als gestrichelte Linie eingetragen, welcher dazu dienen kann, einen Helligkeitssprung als vermutlich einer Parklückenmarkierung zugehörig zu klassifizieren. Ungeachtet des üblichen Messrauschens bzw. farblicher Inhomogenitäten des Bodens ist ein Helligkeitssprung der ersten Seite der zweiten Parklückenmarkierung erkennbar, auf welchem ein Bereich mit einer höheren und über dem Schwellwert 13 liegender Intensität folgt. Anschließend folgt ein negativer Helligkeitssprung 10a der ersten Seite der zweiten Parklückenmarkierung, ab welchem die Intensität unterhalb des Schwellwertes 13 auf einen dem Asphalt entsprechenden Helligkeitswert sinkt. Nach einem Abstand, welcher dem Abstand der Parklückenbegrenzungslinien entspricht, ist ein positiver Helligkeitssprung 8a auf einen Intensitätswert oberhalb des Schwellwertes 13 zu erkennen, nach welchem das Intensitätsniveau bei Erreichen eines zweiten negativen Helligkeitssprungs 7a wieder unter den Schwellwert 13 auf den Normalwert absinkt.

Figur 3b zeigt einen Helligkeitsverlauf entlang einer Auswertelinie 5b in Figur 2. Auswertelinie 5b schneidet lediglich eine Abbildung des Bordsteins 12, dessen Helligkeitssignatur 12a sich nur für die senkrechte Seite des Bordsteins 12 über dem Schwellwert 13 befindet. Obwohl Bordsteine in üblicher Weise etwas dunkler als Fahrbahnmarkierungen bzw. Parklückenmarkierungen 6, 9 sind, wird die Helligkeitssignatur 12a gerade noch als Parklückenbegrenzung erkannt bzw. klassifiziert.

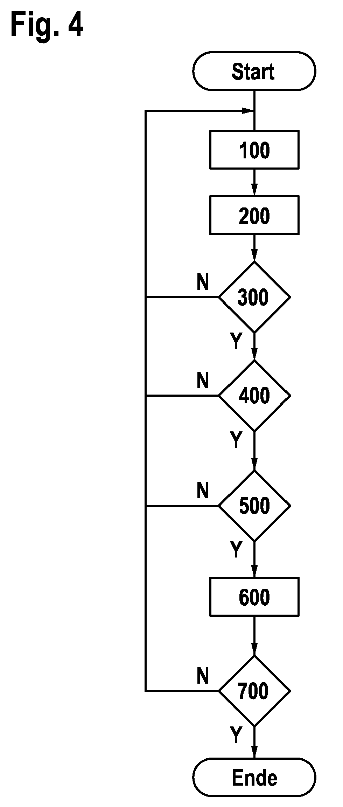

Figur 4 zeigt ein Ablaufdiagramm, visualisierend die Schritte eines Ausführungsbeispiels eines erfindungsgemäßen Verfahrens. Das Verfahren startet beispielsweise durch Einschalten einer Zündung bzw. Einlegen des Rückwärtsganges oder Betätigen einer Funktion durch den Fahrer bzw. Anwender des Systems, wodurch dieser seinen Wunsch äußert, das erfindungsgemäße Verfahren ausführen zu lassen. Selbstverständlich kann ein solcher Befehl auch durch ein Fahrerassistenzsystem oder einen Einparkroboter gegeben werden, welches bzw. welcher im Fahrzeug verbaut ist. In Schritt 100 wird mittels eines 2D-Kamerasystems 2 ein Bild aufgenommen und an eine Auswerteeinheit 3 weitergeleitet. In Schritt 200 werden in der Auswerteeinheit 3 dem Kamerabild Auswertelinien überlagert, aufweichen die Helligkeitsverläufe des Kamerabilds ermittelt werden. Beispielsweise können Auswertelinien jeweils nebeneinander angeordneten Pixeln eines Bildsensors innerhalb des 2D-Kamerasystems 2 entsprechen. In Schritt 300 wird überprüft, ob eine hinreichende Anzahl von Helligkeitssprüngen mit einem Kontrast oberhalb eines vorgegebenen Schwellwertes 13 im Kamerabild enthalten ist. Ist dies nicht der Fall (N), beginnt das Verfahren in Schritt 100 erneut mit der Aufnahme eines Kamerabildes. Ist eine hinreichende Anzahl von Helligkeitssprüngen innerhalb des Kamerabildes ermittelt worden (Y), wird in Schritt 400 geprüft, ob die einander zugehörigen Helligkeitssprünge (also Helligkeitssprünge jeweils von "hell" nach "dunkel" bzw. von dunkel" nach "hell") einer Geraden im abgelichteten Bodenbereich entsprechen. Mit anderen Worten wird in Schritt 400 ermittelt, ob die Helligkeitssprünge einer Parklückenmarkierung bzw. einem Bordstein zuzuordnen sind. Ist dies nicht der Fall (N), wird das Verfahren bei Schritt 100 fortgeführt. Wird eine hinreichende Anzahl von Helligkeitssprüngen einer Geraden im Bodenbereich zugeordnet (Y), wird in Schritt 500 ermittelt, ob zu den ermittelten Helligkeitssprüngen einer Richtung parallel angeordnete Helligkeitssprünge einer anderen Richtung innerhalb eines vorgegebenen Abstandsbereiches zugeordnet werden können. Mit anderen Worten wird in Schritt 500 ermittelt, ob der ermittelte gerade Helligkeitsverlauf einer Parklückenbegrenzung einer bestimmten Dicke zugeordnet werden kann. Ist dies nicht der Fall (N), fährt das Verfahren mit Schritt 100 fort. Wird eine Parklückenbegrenzung einer vordefinierten Stärke ermittelt, kann die Auswerteeinheit Lage und Ausdehnung der ermittelten Parklückenbegrenzung bestimmen und diese Informationen gegebenenfalls an ein Fahrerassistenzsystem bzw. einen Einparkroboter weiterleiten. Anschließend kann in Schritt 700 geprüft werden, ob eine vordefinierte Abbruchbedingung erfüllt ist. Diese kann beispielsweise darin bestehen, dass die Zündung des Fahrzeugs 1 ausgeschaltet wird oder eine Anwendereingabe den Wunsch des Anwenders zu erkennen gibt, das erfindungsgemäße Verfahren zu stoppen. Schließlich kann auch das nachgeschaltete Fahrerassistenzsystem bzw. ein Einparkroboter, welcher das erfindungsgemäße Verfahren zur Lokalisation einer vordefinierten Parkposition verwendet, eine entsprechende Abbruchbedingung senden. Ist eine Abbruchbedingung nicht erfüllt (N), beginnt das Verfahren in Schritt 100 erneut. Ist die Abbruchbedingung erfüllt (Y), endet das Verfahren.

Kerngedanke der vorliegenden Erfindung ist, die Erkennung einer vordefinierten Parkposition unter Verwendung eines 2D-Kamerabildes auf ein eindimensionales System zur Extraktion von Parklückenmarkierungen bzw. Parklückenbegrenzungen zu reduzieren. Hierzu werden anhand vordefinierter und vorbekannter Auswertelinien innerhalb eines Kamerabildes Helligkeitsverläufe gemessen, um einen optischen Kontrast einer Parklückenbegrenzung gegenüber dem sonstigen Fahrbahnbelag bzw. Pflaster zur Erkennung der Parklückenbegrenzung zu verwenden. Verschiedene Algorithmen werden vorgeschlagen, um aus den eindimensionalen Helligkeitsverläufen auf das Vorliegen oder Nichtvorliegen einer vordefinierten Parkposition zu schließen.

Auch wenn die vorstehend diskutierten Merkmale und Aspekte der vorliegenden Erfindung anhand der beigefügten Zeichnungsfiguren detailliert beschrieben worden sind, sind für den Fachmann viele Modifkationen und Erweiterungen des Verfahrens bzw. der Vorrichtung möglich, welche sämtlich als innerhalb des Bereichs der vorliegenden Erfindung liegend zu erachten sind, wie er allein durch die beigefügten Ansprüche definiert wird.

## Patentansprüche

1. Verfahren zur Lokalisation einer vordefinierten Parkposition, umfassend die Schritte
- Erfassen eines Bodenbereiches mit einem optischen 2D-Kamerasystem (2);
- Ermittlung von Helligkeitsverläufen auf vordefinierten Auswertelinien (5a, 5b) innerhalb des Kamerabildes (4);
- Ermittlung von Helligkeitssprüngen (7a, 8a, 10a, 11a) in den ermittelten Helligkeitsverläufen
**gekennzeichnet durch** den weiteren Schritt
- Entscheiden, dass eine Parklückenmarkierung (6, 9) und/oder eine Bordsteinkante (12) vorliegt, wenn die Helligkeitssprünge (7a, 8a, 10a, 11a) über eine vordefinierte Anzahl von Auswertelinien (5a, 5b) im Wesentlichen auf einer Linie liegen.

2. Verfahren nach Anspruch 1, weiter umfassend
- Ermittlung der Lage der auf den Auswertelinien (5a, 5b) abgebildeten Bodenbereiche relativ zu einem Fahrzeug (1).

3. Verfahren nach Anspruch 1 oder 2, weiter umfassend
- Entscheiden, dass Parklückenmarkierungen vorliegen, wenn die Helligkeitssprünge (7a, 8a, 10a, 11 a) über eine vordefinierte Anzahl von Auswertelinien (5a, 5b) im Wesentlichen auf zwei parallelen Linien liegen.

4. Vorrichtung zur Lokalisation einer vordefinierten Parkposition, umfassend
- ein fahrzeugbasiertes 2D-Kamerasystem (2) und
- eine Auswerteeinheit (3), wobei
das 2D-Kamerasystem (2) eingerichtet ist, einen Bodenbereich zu erfassen; und
die Auswerteeinheit (3) eingerichtet ist, Helligkeitsverläufe auf vordefinierten Auswertelinien innerhalb des Kamerabildes (4) zu ermitteln und Helligkeitssprünge (7a, 8a, 10a, 11a) in den ermittelten Helligkeitsverläufen zu ermitteln,
**dadurch gekennzeichnet, dass** die Auswerteeinheit (3) weiter eingerichtet ist, zu entscheiden, dass eine Parklückenmarkierung (6, 9) und/oder eine Bordsteinkante (12) vorliegt, wenn die Helligkeitssprünge (7a, 8a, 10a, 11 a) über eine vordefinierte Anzahl von Auswertelinien (5a, 5b) im Wesentlichen auf einer Linie liegen..

5. Vorrichtung nach Anspruch 4, wobei die Auswerteeinheit (3) weiter eingerichtet ist, die Lage der auf den Auswertelinien (5a, 5b) abgebildeten Bodenbereiche relativ zum Fahrzeug (1) zu ermitteln.

6. Vorrichtung nach Anspruch 4 oder 5, wobei die Auswerteeinheit (3) weiter eingerichtet ist, zu entscheiden, dass Parklückenmarkierungen (6, 9) vorliegen, wenn die Helligkeitssprünge (7a, 8a, 10a, 11a) über eine vordefinierte Anzahl von Auswertelinien (5a, 5b) im Wesentlichen auf zwei parallelen Linien liegen.

7. Verfahren nach einem der Ansprüche 1 bis 3 oder Vorrichtung nach einem der Ansprüche 4 bis 6, wobei die Ermittlung von Helligkeitssprüngen (7a, 8a, 10a, 11 a) über mindestens zwei, insbesondere an unterschiedlichen Positionen des 2D-Kamerasystems (2) aufgenommene, Kamerabilder (4) erfolgt.

8. Fahrerassistenzsystem zur Unterstützung eines Fahrers beim Einparken oder Einparkroboter, zum automatischen Einparken eines Fahrzeugs, umfassend einen Prozessor, der eingerichtet ist, die Schritte des in den Ansprüchen 1 bis 3 oder 7 definierten Verfahrens auszuführen oder umfassend eine Vorrichtung nach einem der Ansprüche 4 bis 6.

## Claims

1. Method for locating a predefined parking position, comprising the steps of
- recording a ground area using an optical 2-D camera system (2);
- determining brightness curves on predefined evaluation lines (5a, 5b) inside the camera image (4) ;
- determining sudden brightness changes (7a, 8a, 10a, 11a) in the brightness curves determined,
**characterized by** the further step of
- deciding that a parking space mark (6, 9) and/or a kerb (12) is/are present if the sudden brightness changes (7a, 8a, 10a, 11a) are substantially on one line over a predefined number of evaluation lines (5a, 5b).

2. Method according to Claim 1, also comprising
- determining the position of the ground areas imaged on the evaluation lines (5a, 5b) relative to a vehicle (1).

3. Method according to Claim 1 or 2, also comprising
- deciding that parking space marks are present if the sudden brightness changes (7a, 8a, 10a, 11a) are substantially on two parallel lines over a predefined number of evaluation lines (5a, 5b).

4. Device for locating a predefined parking position, comprising
- a vehicle-based 2-D camera system (2) and
- an evaluation unit (3),
the 2-D camera system (2) being set up to record a ground area; and
the evaluation unit (3) being set up to determine brightness curves, on predefined evaluation lines inside the camera image (4) and to determine sudden brightness changes (7a, 8a, 10a, 11a) in the brightness curves determined,
**characterized in that** the evaluation unit (3) is also set up to decide that a parking space mark (6, 9) and/or a kerb (12) is/are present if the sudden brightness changes (7a, 8a, 10a, 11a) are substantially on one line over a predefined number of evaluation lines (5a, 5b).

5. Device according to Claim 4, the evaluation unit (3) also being set up to determine the position of the ground areas imaged on the evaluation lines (5a, 5b) relative to the vehicle (1).

6. Device according to Claim 4 or 5, the evaluation unit (3) also being set up to decide that parking space marks (6, 9) are present if the sudden brightness changes (7a, 8a, 10a, 11a) are substantially on two parallel lines over a predefined number of evaluation lines (5a, 5b).

7. Method according to one of Claims 1 to 3 or device according to one of Claims 4 to 6, sudden brightness changes (7a, 8a, 10a, 11a) being determined using at least two camera images (4) which are recorded, in particular, at different positions of the 2-D camera system (2).

8. Driver assistance system for assisting a driver when parking or parking robot for automatically parking a vehicle, comprising a processor which is set up to carry out the steps of the method defined in Claims 1 to 3 or 7 or comprising a device according to one of Claims 4 to 6.

## Revendications

1. Procédé de localisation d'une position de stationnement prédéfinie, comprenant les étapes
- détection d'une zone de sol avec un système de caméra optique 2D (2) ;
- détermination de courbes de luminosité à partir de lignes d'interprétation (5a, 5b) prédéfinies à l'intérieur de l'image de caméra (4) ;
- détermination de sauts de luminosité (7a, 8a, 10a, 11a) dans les courbes de luminosité déterminées, **caractérisé par** l'étape supplémentaire
- décision de la présence d'un marquage d'emplacement de stationnement (6, 9) et/ou d'une pierre de bordure (12) lorsque les sauts de luminosité (7a, 8a, 10a, 11a) sur un nombre prédéfini de lignes d'interprétation (5a, 5b) se trouvent pour l'essentiel sur une ligne.

2. Procédé selon la revendication 1, comprenant en outre
- détermination de la position des zones du sol représentées sur les lignes d'interprétation (5a, 5b) par rapport à un véhicule (1).

3. Procédé selon la revendication 1 ou 2, comprenant en outre
- décision de la présence de marquages d'emplacement de stationnement lorsque les sauts de luminosité (7a, 8a, 10a, 11a) sur un nombre prédéfini de lignes d'interprétation (5a, 5b) se trouvent pour l'essentiel sur deux lignes parallèles.

4. Dispositif de localisation d'une position de stationnement prédéfinie, comprenant
- un système de caméra 2D (2) monté sur véhicule et
- une unité d'interprétation (3),
le système de caméra 2D (2) étant conçu pour détecter une zone de sol ; et
l'unité d'interprétation (3) étant conçue pour déterminer des courbes de luminosité sur des lignes d'interprétation prédéfinies au sein de l'image de caméra (4) et pour déterminer des sauts de luminosité (7a, 8a, 10a, 11a) dans les courbes de luminosité déterminées,
**caractérisé en ce que** l'unité d'interprétation (3) est en outre conçue pour décider de la présence d'un marquage d'emplacement de stationnement (6, 9) et/ou d'une bordure de trottoir (12) lorsque les sauts de luminosité (7a, 8a, 10a, 11a) sur un nombre prédéfini de lignes d'interprétation (5a, 5b) se trouvent pour l'essentiel sur une ligne.

5. Dispositif selon la revendication 4, l'unité d'interprétation (3) étant en outre conçue pour déterminer la position des zones du sol représentées sur les lignes d'interprétation (5a, 5b) par rapport au véhicule (1).

6. Dispositif selon la revendication 4 ou 5, l'unité d'interprétation (3) étant en outre conçue pour décider de la présence de marquages d'emplacement de stationnement (6, 9) lorsque les sauts de luminosité (7a, 8a, 10a, 11a) sur un nombre prédéfini de lignes d'interprétation (5a, 5b) se trouvent pour l'essentiel sur deux lignes parallèles.

7. Procédé selon l'une des revendications 1 à 3 ou dispositif selon l'une des revendications 4 à 6, la détermination des sauts de luminosité (7a, 8a, 10a, 11a) s'effectuant par le biais d'au moins deux images de caméra (4), notamment enregistrées à des positions différentes du système de caméra 2D (2).

8. Système d'assistance au conducteur destiné à assister un conducteur lors d'une mise en stationnement ou robot de mise en stationnement destiné à mettre automatiquement en stationnement un véhicule, comprenant un processeur qui est conçu pour exécuter les étapes du procédé défini dans les revendications 1 à 3 ou 7, ou comprenant un dispositif selon l'une des revendications 4 à 6.
